# EUROPÄISCHE PATENTSCHRIFT

(11) **EP 3 023 134 B1**
(45) Veröffentlichungstag und Bekanntmachung des Hinweises auf die Patenterteilung: **18.07.2018**
(21) Anmeldenummer: 14003911.6
(22) Anmeldetag: 20.11.2014
(51) Int. Cl.: B01D 24/46, F16B 5/00

(54) **FILTERDÜSE**
FILTER NOZZLE
BUSE DE FILTRE

(43) Veröffentlichungstag der Anmeldung: 25.05.2016
(73) Patentinhaber: Kleemeier, Schewe & Co. KSH GmbH, 32051 Herford (DE)
(72) Erfinder: Schewe, Christian, 32120 Hiddenhausen (DE)
(74) Vertreter: Schober, Mirko

(56) Entgegenhaltungen:
- EP-A2- 0 068 316
- WO-A1-2014/053006
- WO-A1-2014/065179
- BE-A- 651 702
- DE-A1- 2 219 081
- FR-A- 1 184 324
- US-A- 4 579 659

## Beschreibung

Die Erfindung betrifft eine Filterdüse nach dem Oberbegriff des Anspruchs 1.

Bei derartigen Filterdüsen ist in der Regel ein Filterdüsenrohr vorhanden, welches mit einem entsprechenden Befestigungsabschnitt in eine dafür vorgesehene Filterdüsenaufnahme eingesteckt werden kann. Damit die Filterdüse sich im Betrieb, in welchem sie hydrostatischem oder hydrodynamischem Druck ausgesetzt ist, aus der Aufnahme nicht löst, ist ein Sicherungsmechanismus vorgesehen, welcher ein Rastelement mit einem Rastvorsprung aufweist. Dieses Rastelement wird beim Einstecken der Filterdüse in die Öffnung der Filterdüsenaufnahme zur Mitte der Filterdüse hin gedrückt, und schnappt beim Einstecken in die Filterdüsenaufnahme ein, wodurch die Filterdüse mit der Filterdüsenaufnahme verrastet.

Soll die Filterdüse entnommen werden, so wird die Düse mit einem Hammer durch die Öffnung der Filterdüsenaufnahme geschlagen. Dabei können z. B. Teile der Düse in der die Filterdüsenaufnahme aufweisenden Filtervorrichtung verbleiben oder die Filterdüsenaufnahme beschädigt werden. Zudem ist diese Art der Demontage aufwändig und erfordert zusätzliches Werkzeug.

Aufgabe der vorliegenden Erfindung ist es daher, eine Filterdüse der eingangs genannten Art anzugeben, die diese Nachteile nicht aufweist.

Gelöst wird diese Aufgabe durch eine Filterdüse mit den Merkmalen des Anspruchs 1. Vorteilhafte Ausführungsformen finden sich in den abhängigen Ansprüchen.

Die erfindungsgemäße Filterdüse, die zum Einstecken in eine Filterdüsenaufnahme ausgelegt ist, weist einen Anschlag zur Anlage an die Filterdüsenaufnahme im eingesteckten Zustand der Filterdüse sowie einen Sicherungsmechanismus zum Sichern der Filterdüse in der Filterdüsenaufnahme auf. Dabei dient die Sicherung dazu, dass die Düse sich durch Druckbelastungen im Betrieb (also beim Durchströmen flüssiger Medien) nicht aus der Verankerung löst. Dazu umfasst der Sicherungsmechanismus wenigstens ein Rastelement, welches einen in Einsteckrichtung unterhalb des Anschlages angeordneten Rastvorsprung aufweist. Dieser schnappt beim Einstecken der Filterdüse in die Filterdüsenaufnahme zurück und verrastet so mit einem Teil der Filterdüsenaufnahme. Erfindungsgemäß ist nun vorgesehen, dass das Rastelement wenigstens einen im eingesteckten Zustand der Filterdüse von außen zugänglichen Betätigungsabschnitt aufweist. Dieser Betätigungsabschnitt ist aufgrund seiner Zugänglichkeit durch einen Benutzer zu betätigen und dient dazu, die Verrastung des Rastelements mit der Filterdüsenaufnahme zu lösen.

Auf diese Weise kann durch Betätigen des Betätigungsabschnitts die Filterdüse gewaltlos aus der Rastaufnahme entnommen werden und es bleiben keine Teile in der Filterdüsenaufnahme zurück.
Nach einer vorteilhaften Ausführungsform ist vorgesehen, dass das Rastelement als eine in einem ersten Bereich mit der Filterdüse verbundene Rastklinke ausgebildet ist. Diese wird durch Eintauchen der Filterdüse in die dafür vorgesehene Aufnahme zurück gedrückt und baut eine Vorspannung auf, bis die endgültige Einsteckposition erreicht ist. Dann schnappt die Klinke zurück und der Rastvorsprung hintergreift einen Teil der Filterdüsenaufnahme und die Düse ist arretiert.

Der Betätigungsabschnitt ist in Einsteckrichtung oberhalb des Anschlages oder auf derselben Höhe angeordnet. Auf diese Weise ist er von außen leicht zugänglich und kann vom Benutzer mit einem Hilfsgegenstand oder lediglich mit der Hand insbesondere durch Drücken zur Mitte bzw. Mittelachse der Filterdüse hin betätigt werden.
Zur besseren manuellen Betätigung kann vorgesehen sein, dass der Betätigungsabschnitt einen Betätigungszapfen aufweist. Dieser springt bevorzugt radial nach außen vor und ist so gut erreichbar.

Bevorzugt sind nach einer vorteilhaften Ausführungsform wenigstens zwei Rastelemente vorgesehen, die zu beiden Seiten einer die Mittelachse enthaltenden Ebene liegen. Auf diese Weise ist die Betätigung der Betätigungselemente ergonomisch einfach, weil die Filterdüse mit Daumen und Zeigefinger einer Hand des Benutzers entfernt werden kann. Insbesondere kann dazu vorgesehen sein, dass sich die beiden Rastelemente bezüglich der Mittelachse der Filterdüse diametral gegenüber liegen.

Für einen sicheren Halt in der Filterdüsenaufnahme und ein sicheres Erreichen der Rastposition kann vorgesehen sein, dass der Anschlag eine Kragenform aufweist und insbesondere ein die Filterdüse umlaufender Kragen ist. Bevorzugt ist dabei vorgesehen, dass der Kragen in seiner Umfangslinie wenigstens eine Aussparung im Bereich des Rastelements aufweist. Auf diese Weise ist das Rastelement in radialer Richtung ausreichend beweglich.

Das wenigstens eine Rastelement weist vorteilhafter Weise einen im Bereich des Anschlages im Vergleich zur Umfangslinie des Anschlages und gegenüber dem Rastvorsprung zur Mittelachse hin zurückspringenden Abschnitt auf. Dieser Abschnitt bildet die Verbindung zwischen dem Betätigungsabschnitt und dem Rastvorsprung. Bevorzugt ist der zurückspringende Abschnitt daher zwischen dem Betätigungsabschnitt und dem Rastvorsprung angeordnet.

Die Erfindung betrifft ferner ein Filterdüsensystem mit einer oben beschriebenen Filterdüse und einer Filterdüsenaufnahme. Diese weist eine Öffnung auf, in die die Filterdüse eingesteckt ist. Der Anschlag der Filterdüse liegt dabei gegen eine erste Seite der Filterdüsenaufnahme an. Der Rastvorsprung der Filterdüse befindet sich dabei auf der der ersten Seite abgewandten Seite der Filterdüsenaufnahme.

Die Erfindung wird nachfolgend anhand des in den Figuren 1 bis 6 gezeigten Ausführungsbeispiels näher erläutert.
- Figur 1: - zeigt eine erfindungsgemäße Filterdüse mit einer Schlitze aufweisenden Abdeckung in perspektivischer Ansicht.
- Figur 2: - zeigt die erfindungsgemäße Filterdüse ohne Schlitzabdeckung in perspektivischer Ansicht.
- Figur 3: - zeigt eine in einer Filterdüsenaufnahme montierte erfindungsgemäße Filterdüse in Schnittbzw. Seitenansicht.
- Figur 4: - zeigt die Abbildung aus Figur 3 beim Entfernen der Schlitzabdeckung.
- Figur 5: - zeigt die Abbildung aus Figur 4 nach dem Entfernen der Schlitzabdeckung und vor der Betätigung der Betätigungsabschnitte.
- Figur 6: - zeigt die Abbildung aus Figur 5 bei der Betätigung der Betätigungsabschnitte und beim Entfernen der Filterdüse aus der Filterdüsenaufnahme.

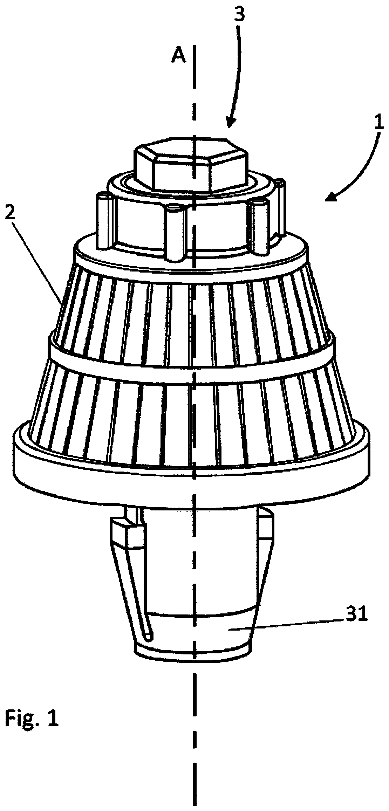

Die in Figur 1 gezeigte Filterdüse 1 weist einen Rohrabschnitt 3 und eine darauf aufschraubbare Schlitzabdeckung 2 auf. Die Filterdüse 1 ist um eine Mittelachse A herum ausgebildet, wobei die Mittelachse im gezeigten Beispiel Teil einer Symmetrieebene ist, zu der die Filterdüse im Wesentlichen symmetrisch ausgebildet ist. Mit einem unteren Abschnitt 31 voran kann sie in eine Filterdüsenaufnahme eingesteckt werden.

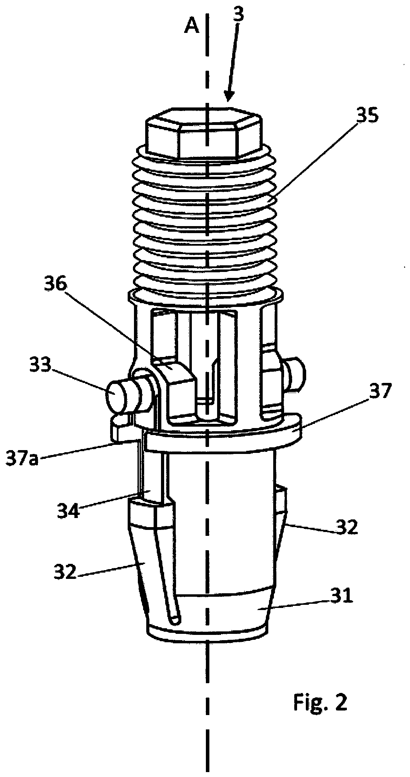

Der Rohrabschnitt 3 der Filterdüse ist in Figur 2 ohne die Schlitzabdeckung abgebildet und weist ein Gewinde 35 zum Aufschrauben der Schlitzabdeckung auf. Im Bereich des unteren (in Einsteckrichtung vorauslaufenden) Endes 31 der Filterdüse 1 sind im gezeigten Beispiel zwei Rastvorsprünge 32 vorgesehen, welche jeweils Teil einer Rastklinke sind. Weitet ist ein den Rohrabschnitt 3 umlaufender Kragen 37 vorgesehen, welcher zwischen dem Gewinde 35 und dem Endabschnitt 31 angeordnet ist und als Anschlag zum Anschlagen gegen die (nicht gezeigte) Filterdüsenaufnahme dient. Der kragenförmige Anschlag weist im Bereich der Rastklinken 32, 33, 34 Aussparungen 37a auf, damit die Rastklinken eine hinreichende Beweglichkeit haben und weit genug in Richtung der Mittelachse A unter Ausbildung einer Vorspannung zurück gedrückt werden können, so dass das Einstecken der Filterdüse in die Öffnung der entsprechenden Aufnahme nicht gestört wird. In der Zeichnung oberhalb des Anschlages 37, der bevorzugt diese Kragenform aufweist, aber grundsätzlich auch anders ausgebildet sein kann, sind an den Rastklinken Betätigungsabschnitte 33 vorgesehen, die hier bevorzugt Zapfenform aufweisen. Zwischen dem Betätigungsabschnitt 33 und dem Rastvorsprung 32 einer Rastklinke ist ein diesen Bauteilen gegenüber radial (d. h. in Richtung auf die Mittelachse A) zurückspringender Verbindungsabschnitt 34 vorgesehen. Dieser Abschnitt ermöglicht den Hintergriff des Rastvorsprungs 32 hinter einen Teil der Filterdüsenaufnahme. Es können mehrere Rastklinken oder Rastvorsprünge vorgesehen sein, aber auch ein einziger Rastvorsprung ist möglich. Vorteilhaft ist die Konfiguration mit - wie dargestellt - bezüglich der Achse A diametral gegenüberliegenden Rastklinken, da dies ein Entfernen der Düse mit zwei Fingern einer Hand ermöglicht.

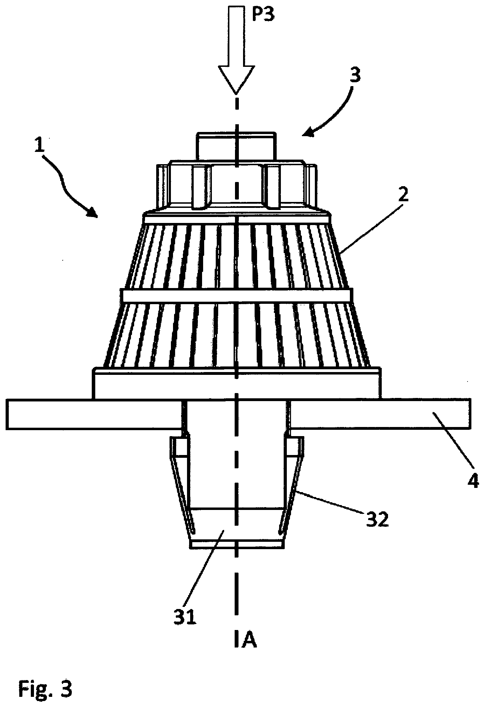

Die Demontage einer in einer Filterdüsenaufnahme 4 fixierten Filterdüse 1 wird anhand der Figuren 3 bis 6 erläutert.

Die in Einsteckrichtung P3 in die Filterdüsenaufnahme 4 eingesteckte Filterdüse 1 hintergreift - wie in Figur 3 zu sehen - mit ihren Rastvorsprüngen 32 die Unterseite der Filterdüsenaufnahme. Auf der Oberseite (der der Unterseite abgewandten Seite) der Filterdüsenaufnahme 4 befindet sich ein Teil des Rohrabschnitts 3 mit der darauf aufgeschraubten Schlitzabdeckung 2. Der untere Teil 31 des Rohrabschnitts 3, an welchem die Rastklinken mit den Rastvorsprüngen 32 angebracht sind, befindet sich auf der Unterseite der Filterdüsenaufnahme 4.

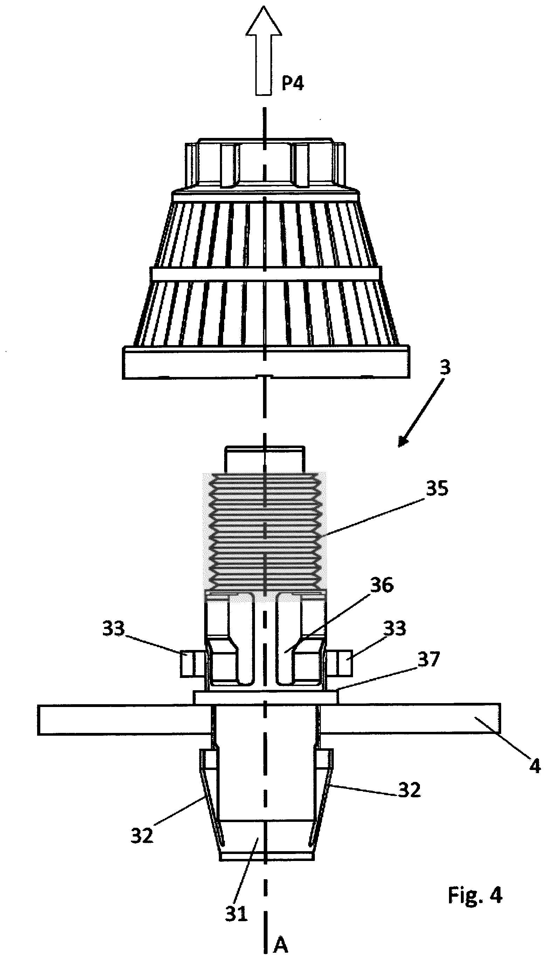

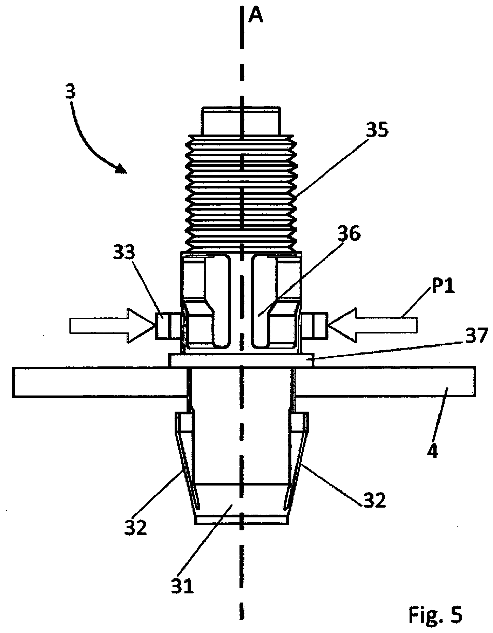

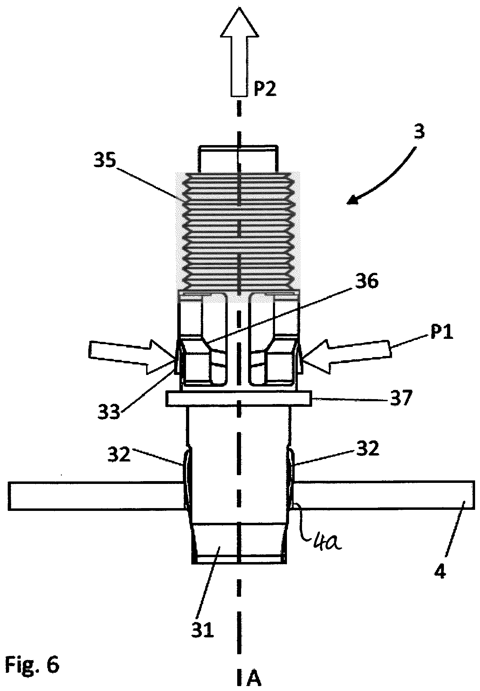

Wie in Figur 4 gezeigt, wird zunächst die Schlitzabdeckung 2 in Richtung P4 (entgegen der Einsteckrichtung P3) von dem Rohrabschnitt 3 insbesondere durch Abschrauben entfernt. Sodann werden die Betätigungsabschnitte 33 radial einwärts (Richtung P1) auf die Mittelachse A zu durch Drücken betätigt, Figur 5, wodurch die im unteren Abschnitt 31 mit dem Rohrabschnitt 3 verbundenen Rastklinken mit ihren Rastvorsprüngen 32 zur Mittelachse A hin verschwenken und die Betätigungsabschnitte 33 dabei in den Ausweichraum 36 zwischen Außenseite des Rohrabschnitts 3 und dessen Mittelachse A eintauchen, Figur 6. Dabei tauchen auch die Rastvorsprünge 32 in einen im Endabschnitt 31 des Rohrabschnitts 3 vorgesehenen Ausweichraum ein, so dass sie in radialer Richtung so weit zurückgezogen werden, dass sie einschließlich des umgebenden Düsenabschnitts 31 durch die Öffnung 4a in der Filterdüsenaufnahme 4 passen. In diesem Zustand kann die Filterdüse bzw. der Rohrabschnitt 3 in Richtung P2 entgegen der Einsteckrichtung bei betätigten Betätigungsabschnitten 33 aus der Filterdüsenaufnahme 4 herausgezogen und rückstandsfrei aus dieser entfernt werden.

## Patentansprüche

1. Filterdüse (1) zum Einstecken in eine Filterdüsenaufnahme (4), mit einem Anschlag (37) zur Anlage an die Filterdüsenaufnahme (4) im eingesteckten Zustand der Filterdüse (1) sowie einem Sicherungsmechanismus zum Sichern der Filterdüse (1) in der Filterdüsenaufnahme (4), wobei der Sicherungsmechanismus wenigstens ein Rastelement (32, 33, 34) umfasst, welches einen in Einsteckrichtung (P3) unterhalb des Anschlages (37) angeordneten Rastvorsprung (34) aufweist, der dazu ausgelegt ist, beim Einstecken der Filterdüse (1) in die Filterdüsenaufnahme (4) mit einem Abschnitt derselben zu verrasten, wobei das Rastelement (32, 33, 34) wenigstens einen im eingesteckten Zustand der Filterdüse von außen zugänglichen Betätigungsabschnitt (33) aufweist
**dadurch gekennzeichnet,**
**dass** der Betätigungsabschnitt in Einsteckrichtung oberhalb des Anschlages (37) oder auf derselben Höhe angeordnet ist.

2. Filterdüse (1) nach Anspruch 1,
**dadurch gekennzeichnet,**
**dass** das Rastelement (32) als eine in einem ersten Bereich (31) mit der Filterdüse (1) verbundene Rastklinke ausgebildet ist.

3. Filterdüse (1) nach einem der vorigen Ansprüche,
**dadurch gekennzeichnet,**
**dass** der Betätigungsabschnitt (33) einen Betätigungszapfen aufweist.

4. Filterdüse (1) nach einem der vorigen Ansprüche,
**dadurch gekennzeichnet,**
**dass** die Filterdüse (1) eine Mittelachse (A) aufweist.

5. Filterdüse (1) nach Anspruch 5,
**dadurch gekennzeichnet,**
**dass** wenigstens zwei Rastelemente (32, 33, 34) vorgesehen sind, die zu beiden Seiten einer die Mittelachse (A) enthaltenden Ebene liegen.

6. Filterdüse (1) nach Anspruch 6,
**dadurch gekennzeichnet,**
**dass** sich die beiden Rastelemente (32, 33, 34) bezüglich der Mittelachse (A) diametral gegenüber liegen.

7. Filterdüse (1) nach einem der vorigen Ansprüche,
**dadurch gekennzeichnet,**
**dass** der Anschlag (37) ein die Filterdüse umlaufender Kragen ist, der in seiner Umfangslinie wenigstens eine Aussparung (37a) im Bereich des Rastelements (32, 33, 34) aufweist.

8. Filterdüse (1) nach einem der vorigen Ansprüche 5 bis 7,
**dadurch gekennzeichnet,**
**dass** der Anschlag (37) eine Kragenform aufweist.

9. Filterdüse (1) nach einem der Ansprüche 5 bis 8,
**dadurch gekennzeichnet,**
**dass** das wenigstens eine Rastelement (32, 33, 34) einen im Bereich des Anschlages (37) im Vergleich zur Umfangslinie des Anschlages (37) und gegenüber dem Rastvorsprung zur Mittelachse (A) hin zurückspringenden Abschnitt (34) aufweist.

10. Filterdüse (1) nach Anspruch 9,
**dadurch gekennzeichnet,**
**dass** der zurückspringende Abschnitt (34) zwischen dem Betätigungsabschnitt (33) und dem Rastvorsprung (32) angeordnet ist.

11. Filterdüsensystem mit einer Filterdüse (1) nach einem der vorigen Ansprüche und einer Filterdüsenaufnahme (4) mit einer Öffnung, in die die Filterdüse (1) eingesteckt ist, wobei der Anschlag (37) der Filterdüse (1) gegen eine erste Seite der Filterdüsenaufnahme (4) anliegt und sich der Rastvorsprung (32) der Filterdüse (1) auf der der ersten Seite abgewandten Seite der Filterdüsenaufnahme (4) befindet.

## Claims

1. Filter nozzle (1) for insertion into a filter nozzle socket (4), with a stop (37) for bearing against the filter nozzle socket (4) when the filter nozzle (1) is inserted, as well as a securing mechanism for securing the filter nozzle (1) in the filter nozzle socket (4) wherein the securing mechanism comprises at least one detent element (32, 33, 34) which has a detent projection (34) mounted underneath the stop (37) in the insert direction (P3) and designed to engage with a section of the socket when the filter nozzle (1) is inserted in the filter nozzle socket (4), wherein the detent element (32, 33, 34) has at least one actuating section (33) which is accessible from outside in the inserted state of the filter nozzle,
**characterised in that**
the actuating section is arranged in the insert direction above the stop (37) or at the same level thereof.

2. Filter nozzle (1) according to claim 1
**characterised in that**
the detent element (32) is designed as a detent pawl which is connected in a first region (31) to the filter nozzle (1).

3. Filter nozzle (1) according to one of the preceding claims
**characterised in that**
the actuating section (33) comprises an actuating pin.

4. Filter nozzle (1) according to one of the preceding claims
**characterised in that**
the filter nozzle (1) has a centre axis (A).

5. Filter nozzle (1) according to claim 5
**characterised in that**
at least two detent elements (32, 33, 34) are provided which lie either side of a plane containing the centre axis (A).

6. Filter nozzle (1) according to claim 6
**characterised in that**
the two detent elements (32, 33, 34) lie diametrically opposite one another in relation to the centre axis (A) .

7. Filter nozzle (1) according to one of the preceding claims
**characterised in that**
the stop (37) is a collar surrounding the filter nozzle and having in its circumferential line at least one recess (37a) in the region of the detent element (32, 33, 34).

8. Filter nozzle (1) according to one of the preceding claims 5 to 7
**characterised in that**
the stop (37) has a collar shape.

9. Filter nozzle (1) according to one of the claims 5 to 8
**characterised in that**
the at least one detent element (32, 33, 34) has a section (34) which is recessed in the region of the stop (37) in relation to the circumferential line of the stop (37) and set towards the centre axis (A) in relation to the detent projection.

10. Filter nozzle (1) according to claim 9
**characterised in that**
the recessed section (34) is arranged between the actuating section (33) and the detent projection (32).

11. Filter nozzle system with a filter nozzle (1) according to one of the preceding claims and a filter nozzle socket (4) with an opening in which the filter nozzle (1) is inserted, wherein the stop (37) of the filter nozzle (1) bears against a first side of the filter nozzle socket (4) and the detent projection (32) of the filter nozzle (1) is located on the side of the filter nozzle socket (4) facing away from the first side.

## Revendications

1. Buse de filtre (1), destinée à être introduite dans un réceptacle de buse de filtre (4), avec une butée (37), destinée à porter contre le réceptacle de buse de filtre (4) quand la buse de filtre (1) est introduite, ainsi qu'avec un mécanisme de sécurisation pour la sécurisation de la buse de filtre (1) dans le réceptacle de buse de filtre (4), sachant que le mécanisme de sécurisation comprend au moins un élément d'encliquetage (32, 33, 34), qui présente une saillie de blocage (34), qui, disposée, dans la direction d'introduction (P3), au-dessous de la butée (37), est conçue pour s'enclencher avec une section du réceptacle de buse de filtre (4) lors de l'introduction de la buse de filtre (1) dans celui-ci, sachant que l'élément d'encliquetage (32, 33, 34) présente une section d'actionnement (33) accessible de l'extérieur,
**caractérisée en ce que**
la section d'actionnement est disposée, dans la direction d'introduction, au-dessus de la butée (37) ou à la même hauteur.

2. Buse de filtre (1) selon la revendication 1,
**caractérisée en ce que**
l'élément d'encliquetage (32) est réalisé sous la forme d'un organe d'encliquetage relié à la buse de filtre (1), dans une première section (31).

3. Buse de filtre (1) selon l'une des revendications précédentes,
**caractérisée en ce que**
la section d'actionnement (33) présente un organe d'actionnement.

4. Buse de filtre (1) selon l'une des revendications précédentes,
**caractérisée en ce que**
la buse de filtre (1) présente un axe central (A).

5. Buse de filtre (1) selon la revendication 5,
**caractérisée en ce que**
sont prévus au moins deux éléments d'encliquetage (32, 33, 34), qui sont disposés des deux côtés d'un plan contenant l'axe central (A).

6. Buse de filtre (1) selon la revendication 6,
**caractérisée en ce que**
les deux éléments d'encliquetage (32, 33, 34), en ce qui concerne l'axe central (A), sont diamétralement opposés.

7. Buse de filtre (1) selon l'une des revendications précédentes,
**caractérisée en ce que**
la butée (37) est une collerette qui, entourant la buse de filtre, qui, sur sa ligne périphérique, présente au moins un évidement (37a), dans le secteur de l'élément d'encliquetage (32, 33, 34).

8. Buse de filtre (1) selon l'une des revendications 5 à 7,
**caractérisée en ce que**
la butée (37) présente la forme d'une collerette.

9. Buse de filtre (1) selon l'une des revendications 5 à 8,
**caractérisée en ce que**
l'au moins un élément d'encliquetage (32, 33, 34) présente, dans le secteur de la butée (37), une section (34) en retrait vers l'axe central (A), par rapport à la ligne périphérique de la butée (37) et par rapport à la saillie d'encliquetage.

10. Buse de filtre (1) selon la revendication 9,
**caractérisée en ce que**
la section en retrait (34) est disposée entre la section d'actionnement (33) et la saillie d'encliquetage (32) .

11. Système de buse de filtre, avec une buse de filtre (1) selon l'une des revendications précédentes, avec une ouverture, dans laquelle est introduite la buse de filtre (1), sachant que la butée (37) de la buse de filtre (1) porte contre un premier côté du réceptacle de buse (4) et que la saillie d'encliquetage (32) de la buse de filtre (1) est située sur le côté du réceptacle de buse de filtre (4) qui est opposé au premier côté.
